# EUROPEAN PATENT APPLICATION

(11) **EP 4 570 855 A1**
(43) Date of publication of application: **18.06.2025**
(21) Application number: 23864506.3
(22) Date of filing: 07.08.2023
(51) Int. Cl.: C08L 23/08, C08L 87/00

(54) **MODIFIED EVOH RESIN AND METHOD FOR PREPARING SAME**

(30) Priority: 15.09.2022 CN 202211120797
(71) Applicant: Inner Mongolia Shuangxin Environment-Friendly Material Co., Ltd., Ordos, Inner Mongolia 016100 (CN)
(72) Inventor: GAI, Tingting, Shandong 266000 (CN); LIN, Xingwang, Shandong 266000 (CN); LI, Yuhang, Shandong 266000 (CN); XU, Hongli, Shandong 266000 (CN); ZHAO, Xinxin, Shandong 266000 (CN)
(74) Representative: Metida
(86) International application number: PCT/CN2023/111445
(87) International publication number: WO 2024/055772

(57) **Abstract**

The present application provides a modified EVOH resin, which is obtained by that EVOH resin is blended with a hyperbranched polymer during an extrusion and granulation step and is modified by the hyperbranched polymer; wherein, the hyperbranched polymer is obtained by reacting a hybrid compound containing boron, silicon or titanium with a small organic molecule containing hydroxyl group. The modified EVOH resin can not only increase the branching degree of the EVOH resin and increase the radiation crosslinking frequency of the EVOH resin, but also effectively reduce the amount of boron-containing compound added and significantly improve the forming processing performance and heat resistance without changing the original preparation process.

## Description

### TECHNICAL FIELD

The present application belongs to the field of resin processing technology, and in particular relates to a modified EVOH resin and method for preparing same.

### BACKGROUND ART

EVOH (Ethylene Vinyl Alcohol Polymer) resin is formed into film shape, sheet shape, bottle shape, cup shape, tube shape or pipe by melt forming, and the obtained formed product is further processed for practical use. In the process of melt forming and processing, it must be subjected to high temperature for a long time (generally the processing temperature is 200°C ~240°C), thus the forming processability and heat resistance of EVOH resin are very important properties.

In CN108473746A, under heating and pressure, EVOH resin is contacted with an aqueous solution (treatment solution) comprising boric acid compound and alkali metal salt, so that at least a part of the boron in the boric acid compound contained in the EVOH resin is a 4-coordination structure. In this process, the proportion of boron 3-coordination structure converted to 4-coordination structure is relatively small. Although changing the coordination structure of boric acid compound can improve the forming processability of EVOH resin, it is necessary to change the process conditions of the original process, which increases the requirements for the original process conditions and increases production costs and safety risks.

In CN1271095C, the EVOH resin is immersed in a mixed aqueous solution of acetic acid, magnesium dihydrogen phosphate and potassium dihydrogen phosphate in different proportions in the post-treatment stage, and then is dehydrated and dried. However, the improvement degree in this process is limited, and the improved performance is single, which can only improve the heat resistance, has no positive effect on the addition amount of coupling components, and has no improvement effect on the forming and processing performance.

In addition, the forming processability and the heat resistance of the EVOH resin can also be improved by increasing the amount of the boric acid compound; however, when the addition amount of the boric acid compound is too much or localized, tiny fisheye occurs, which will cause the quality of the formed product to be low. Therefore, how to develop a method for effectively improving the forming processing performance and heat resistance of the EVOH resin without changing the original EVOH resin preparation process is particularly important.

### SUMMARY OF THE INVENTION

The present application provides a modified EVOH resin and method for preparing same. At least one embodiment of the method utilizes a hyperbranched polymer and EVOH resin to be melt-blended in an extrusion and granulation step to modify the EVOH resin, which can not only increase the branching degree of the EVOH resin and increase the radiation crosslinking frequency of the EVOH resin, but also effectively reduce the amount of boron-containing compound added and significantly improve the forming processing performance and heat resistance without changing the original preparation process.

A first aspect of the present application provides a modified EVOH resin, wherein the modified EVOH resin is obtained by that EVOH resin is blended with a hyperbranched polymer during an extrusion and granulation step and is modified by the hyperbranched polymer;
wherein, the hyperbranched polymer is obtained by reacting a hybrid compound containing boron, silicon or titanium with a small organic molecule containing hydroxyl group.

Further, the hyperbranched polymer is obtained by reacting a hybrid compound containing boron with a small organic molecule containing hydroxyl group. Wherein, the hybrid compound containing boron is selected from at least one of the following groups: boric acid, and boric acid ester.

Further, the hyperbranched polymer is obtained by reacting a hybrid compound containing silicon with a small organic molecule containing hydroxyl group. Wherein, the hybrid compound containing silicon is selected from at least one of the following groups: divinyldimethylsilane, triethoxyvinylsilane, and tetramethyldioxysilane.

Further, the hyperbranched polymer is obtained by reacting a hybrid compound containing titanium with a small organic molecule containing hydroxyl group. Wherein, the hybrid compound containing titanium is titanic acid ester.

In one embodiment, a melt flow index of the modified EVOH resin is ≤4.5(g/10min), and a yellowing index thereof is ≤6.8.

In one embodiment, a molar content of ethylene units in the modified EVOH resin is 20%-50%.

In one embodiment, a mass fraction ratio of the added hyperbranched polymer to the added EVOH resin is (0.001-1): (50-100).

In one embodiment, according to the actual reaction requirements, the mass fraction of the added hyperbranched polymer within the above range can be 0.001, 0.005, 0.01, 0.05, 0.1, 0.2, 0.3, 0.4, 0.5, 0.6, 0.7, 0.8, 0.9, 1.0 or any point value within the above range; and the mass fraction of the added EVOH resin within the above range can be 55, 60, 65, 70, 75, 80, 85, 90, 95, 100 or any point value within the above range.

In one embodiment, the hyperbranched polymer is prepared by the following method:
dissolving the hybrid compound containing boron, silicon or titanium in a polar solvent, adding the small organic molecule containing hydroxyl group and adding a catalyst, and fully stirring;
introducing nitrogen into the above reaction system for 0.5-1h, raising temperature to 50°C-220°C to react for 6-10h;
adding a settling agent after the reaction is completed, filtering, washing until the filtrate is clear, and drying in vacuum for 22-24h to obtain the hyperbranched polymer.

In one embodiment, the small organic molecule containing hydroxyl group is selected from at least one of the following groups: 1,2-propanediol, 1,3-propanediol, 1,3-butanediol and 1,4-propanediol.

In one embodiment, the polar solvent is selected from at least one of the following groups: dimethylformamide, N,N-dimethylacetamide, dimethyl sulfoxide, tetramethylene sulfone and N-methylpyrrolidone.

In one embodiment, the catalyst is selected from at least one of the following groups: hydrochloric acid, ferric trichloride, potassium hydroxide, sodium hydroxide and platinum catalysts; and the settling agent is selected from at least one of the following groups: n-hexane, ethyl ether and petroleum ether.

In one embodiment, a mass fraction ratio of the added hybrid compound containing boron, silicon or titanium, the small organic molecule containing hydroxyl group, the catalyst and the settling agent is (3-5): (3-5): 1: (50-55).

A second aspect of the present application provides a preparing method for the EVOH resin according to any one of the above technical solutions, comprising the following steps:
in an extrusion and granulation step of a EVOH resin preparation process, a hyperbranched polymer and EVOH resin with a mass fraction ratio of (0.001-1): (50-100) are placed in a stirrer, mixed evenly, melt blended in a twin-screw extruder for 0.1-1h, extruded and granulated, and vacuum dried to obtain the hyperbranched polymer modified EVOH resin.

In one embodiment, during the melt blending in the twin-screw extruder, temperature ranges of three zones of a mixing device are: 70~100°C, 180~200°C and 190~220°C respectively.

Compared with the prior art, the advantages and positive effects of the present application are:
In the Ethylene Vinyl Alcohol Polymer (EVOH) resin and the preparing method thereof provided in at least one embodiment of the present application, the method melt-blend the hyperbranched polymer with the EVOH resin in the extrusion and granulation step of the EVOH resin preparation process, and the EVOH resin is modified by the hyperbranched polymer, thereby effectively increasing the radiation crosslinking frequency of the EVOH resin and the of branching degree of the EVOH resin. The method can effectively reduce the amount of boron-containing compound added and significantly improve the forming processing performance and heat resistance without changing the original EVOH resin preparation process. The method has the characteristics of mild conditions, simple operation, and scalability.

### DETAILED DESCRIPTION OF THE EMBODIMENTS

The technical scheme in the embodiments of the present application will be described clearly and completely as below. Obviously, the described embodiments are only part of the embodiments of the present application, not all of the embodiments. Based on the embodiments in the present application, all other embodiments obtained by ordinary skills in the field without creative work are within the scope of protection of the present application.

EVOH resin, also known as ethylene vinyl alcohol copolymer resin, is known to those skilled in the art for its general preparation process, which includes the following steps:
Polymerization reaction step: monomer vinyl acetate, methanol and initiator are mixed in proportion, and the mixed solution are inputted into a raw material preparation kettle after deoxygenation; ethylene gas enters into the raw material preparation kettle in proportion through a compressor, and the ethylene gas is fully dissolved in the vinyl acetate and methanol; the pressure of the kettle is set to be 3.3-4.0Mpa, the temperature of the kettle is adjusted to be stable at 55-65°C, and the reaction residence time is controlled to be 3-8h to obtain a polymer solution.
Monomer removal step: the obtained polymer solution is inputted into a reduced pressure buffer kettle, and after the residual ethylene monomer is discharged from a pressure reducing valve at an upper part, the polymer solution enters a gas-liquid separator, and then is introduced a monomer removal tower. Methanol vapor is continuously introduced into the bottom of the tower to take away the residual vinyl acetate; the vinyl acetate and methanol solvent collected at the top of the tower enters a reuse tank; and a demonomer polymer solution is obtained at the bottom of the tower.
Alcoholysis reaction step: a certain amount of catalyst and boron-containing compound are dissolved in methanol; the demonomer polymer solution is continuously injected into a premixer by a centrifugal pump, and the methanol solution of the catalyst and boron-containing compound is continuously added in proportion; the polymer solution prepared in the premixer is continuously injected into an upper part of a alcoholysis tower by a centrifugal pump, and methanol vapor is continuously introduced into a bottom part; and the residence time of the demonomer polymer solution in the tower is controlled to be 30min-120min.
Post-treatment step: after the reaction is completed, a certain amount of acetic acid is added into the alcoholysis liquid to adjust the pH of the system; the neutralized alcoholysis liquid is injected into a precipitation kettle, and an aqueous solution is added and stirred to precipitate, with filtering, washing with water, filtering, and drying to obtain the polymer.
Extrusion and granulation step: the dried polymer and conventional additives are put into a stirrer for mixing; after uniform mixing, they pass through a twin-screw extruder, melt circulate, extrude into strips and then enter a granulator for granulating.

The technical solution provided in the present application can improve the forming processing performance and heat resistance of EVOH resin without changing the above-mentioned original preparation process of EVOH resin. The specific method is: in the extrusion and granulation step, hyperbranched polymer is melt blended with the EVOH resin to modify the EVOH resin, which can not only increase the branching degree of the EVOH resin, improves the radiation crosslinking frequency of the EVOH resin, but also effectively reduce the addition amount of the boron-containing compound without changing the original preparation process, and obviously improves the forming processing performance and heat resistance.

### Embodiment 1

In molar fraction, add 10 parts of boric acid to sulfolane and dissolve therein, add 10 parts of 1,2-propylene glycol and 2 parts of hydrochloric acid, and stir fully; after nitrogen is introduced into the reaction system for 0.5h, increase the temperature to 220°C and react for 8h; after the reaction is finished, add 100 parts of n-hexane, filter, wash until the filtrate is clear, and dry in a vacuum oven at 90°C for 24h to obtain a hyperbranched polymer.

In the extrusion and granulation step of the EVOH resin preparation process, 0.005 part of the hyperbranched polymer, 100 parts of EVOH resin (molar content of the ethylene is 38%, mass of the boron-containing compound is 100 ppm based on the EVOH resin) and conventional additives are put into a stirrer to be uniformly mixed, and then added into a twin-screw extruder; the temperatures of three areas are set to be 100°C, 190°C and 210°C; after mixing and melting for 10 minutes, extrusion is performed, and granulation is performed in a granulator to obtain a hyperbranched polymer modified EVOH resin.

### Embodiment 2

In molar fraction, add 10 parts of titanate into N-methylpyrrolidone and dissolve therein, add 10 parts of 1,3-propylene glycol and 2 parts of hydrochloric acid, and stir fully; after nitrogen is introduced into the reaction system for 0.8h, increase the temperature to 160°C and react for 8h; after the reaction is finished, add 100 parts of n-hexane, filter, wash until the filtrate is clear, and dry in a vacuum oven at 90°C for 20h to obtain a hyperbranched polymer.

In the extrusion and granulation step of the EVOH resin preparation process, 0.01 part of the hyperbranched polymer, 100 parts of EVOH resin (molar content of the ethylene is 38%, mass of the boron-containing compound is 100 ppm based on the EVOH resin) and conventional additives are put into a stirrer to be uniformly mixed, and then added into a twin-screw extruder; the temperatures of three areas are set to be 70°C, 180°C and 210°C; after mixing and melting for 20 minutes, extrusion is performed, and granulation is performed in a granulator to obtain a hyperbranched polymer modified EVOH resin.

### Embodiment 3

In molar fraction, add 10 parts of divinyldimethylsilane to dimethyl sulfoxide and dissolve therein, add 10 parts of 1,3-butanediol and 2 parts of platinum catalyst, and stir fully; after nitrogen is introduced into the reaction system for 1h, increase the temperature to 50°C and react for 10h; after the reaction is finished, add 100 parts of n-hexane, filter, wash until the filtrate is clear, and dry in a vacuum oven at 85°C for 22h to obtain a hyperbranched polymer.

In the extrusion and granulation step of the EVOH resin preparation process, 0.05 part of the hyperbranched polymer, 100 parts of EVOH resin (molar content of the ethylene is 38%, mass of the boron-containing compound is 50 ppm based on the EVOH resin) and conventional additives are put into a stirrer to be uniformly mixed, and then added into a twin-screw extruder; the temperatures of three areas are set to be 90°C, 190°C and 220°C; after mixing and melting for 30 minutes, extrusion is performed, and granulation is performed in a granulator to obtain a hyperbranched polymer modified EVOH resin.

### Comparative Example 1

The general preparation process of the EVOH resin is adopted, including the above mentioned polymerization reaction step, monomer removal step, alcoholysis reaction step, post-treatment step and extrusion and granulation step, which are generally the same as those in Embodiment 1; and the difference lies in that the hyperbranched polymer of the present application is not added to modify the EVOH resin in the extrusion and granulation step, and the amount of the boron-containing compound added in the alcoholysis reaction step is 300ppm.

### Comparative Example 2

The general preparation process of the EVOH resin is adopted, including the above mentioned polymerization reaction step, monomer removal step, alcoholysis reaction step, post-treatment step and extrusion and granulation step, which are generally the same as those in Embodiment 1; and the difference lies in that the hyperbranched polymer of the present application is not added to modify the EVOH resin in the extrusion and granulation step, and the amount of the boron-containing compound added in the alcoholysis reaction step is 200ppm.

### Performance test

The EVOH resins prepared in the above-mentioned Embodiments 1-3 and Comparative Examples 1-2 were respectively dried in an oven for 1 hour respectively. After being taken out, the melt flow index of the materials was tested for comparison; wherein the melt flow index of the materials was tested according to ISO 1133 (190°C/2.16g).

10g of the EVOH resins prepared in the above-mentioned Embodiments 1-3 and Comparative Examples 1-2 were respectively placed on a 10*10*5 polytetrafluoroethylene surface dish, placed in an oven, baked at 203°C for 30 minutes, taken out and cooled; and the yellowing index of the EVOH resin was tested for comparison, wherein the yellowing index of the materials after the heat resistance test was tested according to GB/T 39822-2021.

**Table 1 Performance indicators of EVOH resins before and after modification**

| | Hyperbranched polymer : EVOH resin | Mass of boron-containing compound in EVOH resin (based on EVOH resin) | Mix and melt time | Melt flow index (g/10min) | Yellowin g index |
|---|---|---|---|---|---|
| Embodim | 0.005:100 | 100ppm | 10min | 3.5 | 6.5 |
| ent 1 | | | | | |
| Embodim ent 2 | 0.01:100 | 100ppm | 20min | 4.5 | 5.7 |
| Embodim ent 3 | 0.05:100 | 50ppm | 30min | 3.4 | 6.8 |
| Comparati ve Example 1 | 0 | 300ppm | 10min | 10.2 | 10.5 |
| Comparati ve Example 2 | 0 | 200ppm | 10min | 12.4 | 11.2 |

It can be seen from the data of Table 1 that in the extrusion and granulation step proposed by the present application, the hyperbranched polymer and the EVOH resin are melt blended to modify the EVOH resin, so that not only can the branching degree of the EVOH resin be increased, but also the radiation crosslinking frequency of the EVOH resin can be improved, and the addition amount of the boron-containing compound can be effectively reduced without changing the original process, and the forming processing performance and heat resistance are significantly improved. That is, compared with Comparative Examples 1 and 2, the melt flow index and the yellowing index of Embodiments 1-3 are significantly improved, thereby achieving an excellent level of melt flow index ≤ 4.5/g/10min and yellowing index ≤6.8.

## Claims

1. A modified EVOH resin, wherein, the modified EVOH resin is obtained by that EVOH resin is blended with a hyperbranched polymer during an extrusion and granulation step and is modified by the hyperbranched polymer;
wherein, the hyperbranched polymer is obtained by reacting a hybrid compound containing boron, silicon or titanium with a small organic molecule containing hydroxyl group.

2. The modified EVOH resin according to claim 1, wherein, a melt flow index of the modified EVOH resin is ≤4.5(g/10min), and a yellowing index is ≤6.8.

3. The modified EVOH resin according to claim 1, wherein, a molar content of ethylene units in the modified EVOH resin is 20%-50%.

4. The modified EVOH resin according to any one of claims 1-3, wherein, a mass fraction ratio of the added hyperbranched polymer to the added EVOH resin is (0.001-1): (50-100).

5. The modified EVOH resin according to any one of claims 1-4, wherein, the hyperbranched polymer is prepared by the following method:
dissolving the hybrid compound containing boron, silicon or titanium in a polar solvent, adding the small organic molecule containing hydroxyl group and adding a catalyst, and fully stirring;
introducing nitrogen into the above reaction system for 0.5-1h, raising temperature to 50°C-220°C to react for 6-10h;
adding a settling agent after the reaction is completed, filtering, washing until the filtrate is clear, and drying in vacuum for 22-24h to obtain the hyperbranched polymer.

6. The modified EVOH resin according to claim 5, wherein, the hybrid compound containing boron, silicon or titanium is selected from at least one of the following groups: boric acid, boric acid ester, divinyldimethylsilane, triethoxyvinylsilane, tetramethyldioxysilane, and titanic acid ester.

7. The modified EVOH resin according to claim 5, wherein, the small organic molecule containing hydroxyl group is selected from at least one of the following groups: 1,2-propanediol, 1,3-propanediol, 1,3-butanediol and 1,4-propanediol.

8. The modified EVOH resin according to claim 5, wherein, the polar solvent is selected from at least one of the following groups: dimethylformamide, N,N-dimethylacetamide, dimethyl sulfoxide, tetramethylene sulfone and N-methylpyrrolidone; the catalyst is selected from at least one of the following groups: hydrochloric acid, ferric trichloride, potassium hydroxide, sodium hydroxide and platinum catalysts; and the settling agent is selected from at least one of the following groups: n-hexane, ethyl ether and petroleum ether.

9. The modified EVOH resin according to claim 5, wherein, a mass fraction ratio of the added hybrid compound containing boron, silicon or titanium, the small organic molecule containing hydroxyl group, the catalyst and the settling agent is (3-5): (3-5): 1: (50-55).

10. A preparing method for the modified EVOH resin according to any one of claims 1-9, wherein, comprising the following steps:
in an extrusion and granulation step of a EVOH resin preparation process, a hyperbranched polymer and EVOH resin with a mass fraction ratio of (0.001-1): (50-100) are placed in a stirrer, mixed evenly, melt blended in a twin-screw extruder for 0.1-1h, extruded and granulated, and vacuum dried to obtain the hyperbranched polymer modified EVOH resin.
